# EUROPÄISCHE PATENTSCHRIFT

(11) **EP 1 199 938 B1**
(45) Veröffentlichungstag und Bekanntmachung des Hinweises auf die Patenterteilung: **21.06.2006**
(21) Anmeldenummer: 00951476.1
(22) Anmeldetag: 03.08.2000
(51) Int. Cl.: A21C 11/16

(54) **DÜSENTRÄGER UND VORRICHTUNG ZUM EXTRUDIEREN TEIGIGER MASSEN**
NOZZLE HOLDER AND DEVICE FOR EXTRUDING A MATERIAL IN DOUGH FORM
PORTE-FILIERE ET DISPOSITIF POUR EXTRUDER UNE MATIERE SOUS FORME DE PATE

(30) Priorität: 05.08.1999 DE 19936823
(43) Veröffentlichungstag der Anmeldung: 02.05.2002
(73) Patentinhaber: Hosokawa Bepex GmbH, 74211 Leingarten (DE)
(72) Erfinder: HORNA, Marc, D-74360 Ilsfeld (DE); ALTVATER, Frank, D-74074 Heilbronn (DE)
(74) Vertreter: Goetz, Rupert
(86) Internationale Anmeldenummer: PCT/EP2000/007551
(87) Internationale Veröffentlichungsnummer: WO 2001/010224

(56) Entgegenhaltungen:
- EP-A- 0 287 209
- DE-A- 3 030 757
- GB-A- 374 530
- NL-C- 63 246
- US-A- 3 940 226
- US-A- 4 993 934

## Beschreibung

Die Erfindung betrifft einen Düsenträger gemäß dem Oberbegriff des Anspruchs 1 und eine Vorrichtung zum Extrudieren teigiger Massen mit einem derartigen Düsenträger.

Backwaren, Teige und Süßwaren werden oftmals extrudiert, indem unter Druck gesetzte Masse durch eine Düsenanordnung zu einem Strang ausgepreßt wird. Der Strang kann als solcher durch ein Transportband abgeführt oder in kurze Abschnitte geteilt werden. Die äußere Gestalt des Strangs, insbesondere seine Umfangsgestalt, ist von der Düsenanordnung abhängig.

Aus DE-A-30 30 757 ist eine Maschine zum Bilden von Teigringen aus Lebensmittelteig bekannt, bei der Teigstränge über eine Kante eines ersten Transportbandes in eine Speisungsstation ablaufen. Dort gelangen die Teigstränge aufgrund ihres Eigengewichts in je ein oberes Ende eines Rohrelements, das mittels zweier Kugelgelenke schwenkbar gelagert ist. Die Teigstränge treten an dem unteren Enden der Rohrelemente aus und werden von einem zweiten Transportband übernommen. Die unteren Enden der Rohrelemente sind durch eine Querstange bewegbar. Bei dieser Maschine ist es nicht möglich, den Rohrelementen eine unter Druck gesetzte Masse zuzuführen. Eine Klinge, die von der Querstange unabhängig gelagert ist, dient zum Trennen der Teigstränge. Die Klinge kann nur eingesetzt werden, wenn sich die Querstange mit den unteren Enden der Rohrelemente an einer bestimmten Stelle ihrer Bewegungsbahn befindet.

Aus DE-A-1 036 783 ist eine Vorrichtung zum Herstellen von Figuren aus fließfähiger Teigmasse bekannt, bei der die Teigmasse über Schläuche zu Düsen geführt wird, die an einer Halteleiste befestigt und mittels dieser gemeinsam bewegbar sind. Beim Bewegen der Düsen werden die Schläuche verformt, so daß sich ihr Volumen und damit der in ihnen bestehende Druck der Teigmasse ändert. Die Vorrichtung ist daher nur bedingt geeignet, um Teigwaren herzustellen, bei denen der Teig mit genau konstantem Druck aus der Düse austreten muß.

Aus FR-A-808 285 ist eine Vorrichtung zum Extrudieren von Teig und gleichartigen Massen bekannt, bei der eine Drehdüse eine exzentrisch angeordnete Mündung aufweist, der durch einen Zuführkanal Teigmasse unter Druck zugeführt werden kann. Mittels derartiger Drehdüsen können nur einfache geometrische Figuren hergestellt werden.

Aus EP-A-0 168 255 und EP-A-0 177 175 sind Vorrichtungen zum Co-Extrudieren zweier Massen bekannt, die eine innere Masse durch eine Düse und eine äußere Masse mit darin enthaltenen körnigen Partikeln durch einen die Düse umgebenden Trichter extrudieren, wobei die Massen zu einem Strang verbunden werden. Der Trichter weist an seiner Mündung scharfe Kanten auf, um zu erreichen, daß die körnigen Partikel in der äußeren Masse an die Oberfläche gelangen. Die Mündung des Trichters kann gezahnt ausgebildet sein, damit die Partikel aus der Oberfläche hervorstehen. Der Verbundstrang wird von einem Tranportband abgeführt. Hierdurch läßt sich eine Backware aus zwei Massen herstellen, die geradlinige längliche Form hat und an der Oberfläche körnige Partikel aufweist.

Nachteilig bei den oben genannten Vorrichtungen ist, daß mit ihnen nur Backwaren herstellbar sind, die sich in eine Richtung, also in Richtung des Abtransports des Strangs erstrecken. Hingegen ist es nicht möglich, Backwaren herzustellen, die sich in einer Ebene erstrecken oder deren Stränge sich kreuzen. Derartige Backwaren sind beispielsweise Schnecken, Ringe und Brezeln.

Die US 3,940,226 beschreibt einen Düsenträger zur Extrusion einer teigigen Masse, bei dem eine Düse durch ein Gelenk mit einer Kugel schwenkbar gelagert ist. Durch die Kugel erstreckt sich ein Verbindungskanal, der die Düse mit einer Zuführkammer verbindet.

Die US 4,993,934 offenbart eine Extrusionsvorrichtung für eine teigige Masse, bei der am Düsenträger ein Schneidelement zum Abschneiden der extrudierten Masse abgebracht ist.

Aufgabe der Erfindung ist es, einen Düsenträger und eine Vorrichtung zum Extrudieren teigiger Massen vorzusehen, mit denen Backwaren und Süßwaren, die eine Füllung und eine Umhüllung aufweisen und sich in einer Ebene erstrecken, mit hoher Formgenauigkeit herstellbar sind.

Die Aufgabe ist erfindungsgemäß durch einen Düsenträger mit den Merkmalen des Anspruchs 1 und eine Vorrichtung mit den Merkmalen des Anspruchs 4 gelöst.

Der Düsenträger weist zwei Düsen auf, die konzentrisch zueinander angeordnet sind. Mit einem derartigen Düsenträger lassen sich Backwaren herstellen, die eine Füllung und eine Umhüllung aufweisen und sich in einer Ebene erstrecken. Es sind also beispielsweise gefüllte Schnecken oder gefüllte Brezeln herstellbar.

Wenngleich die erfindungsgemäße Düse schwenkbar ist, stellt der erfindungsgemäße Verbindungskanal - im Gegensatz zu den aus DE-A-30 30 757 bekannten Schläuchen - eine nichtelastische Verbindung zwischen dem ortsfesten Zuführkanal und der Düse her. Diese Verbindung ist durch ohnehin vorhandene Bauteile hergestellt und daher besonders einfach gestaltet.

Der Düsenträger ist vorteilhaft dadurch weitergebildet, daß die Düse ein Rohrstück umfaßt, dessen eines Ende schwenkbar gelagert ist und dessen anderes Ende die Mündung aufweist. Durch das Rohrstück ist die Auslenkbarkeit der Düse beim Schwenken vergrößert und zugleich eine genaue Führung der Düse gewährleistet.

Die Mündung der Düse ist besonders genau geführt, indem die Schwenkeinrichtung eine Stange mit einer darin gelagerten Kugel aufweist. Eine derartige Schwenkeinrichtung läßt sich leicht reinigen.

Ein erfindungsgemäßer Düsenträger wird vorteilhaft in einer Vorrichtung zum Extrudieren eingesetzt, wobei besonders vorteilhaft mehrere Düsenträger nebeneinander angeordnet sind und die Mündungen der Düsen dabei durch eine gemeinsame Schwenkeinrichtung schwenkbar sind. Auf diese Weise sind gleichzeitig mehrere Backwaren herstellbar, die die gleiche Form aufweisen. Die Schwenkeinrichtung braucht dabei mit nur einer Steuerung angesteuert zu werden, so daß die Herstellungskosten der Vorrichtung bezogen auf ihre Kapazität besonders gering sind.

Die beschriebene Vorrichtung ist vorteilhaft weitergebildet, indem an der Schwenkeinrichtung eine Schneid- und/oder Quetscheinrichtung angeordnet ist. Die Schneid- und/oder Quetsch- einrichtung dient zum Trennen und/oder Schließen des extrudierten Strangs. Indem die Schneid- und/oder Quetschvorrichtung mit an der Schwenkeinrichtung angeordnet ist, kann in jeder Stellung der Schwenkeinrichtung der Strang geschnitten und/oder geschlossen werden.

Ein Ausführungsbeispiel einer erfindungsgemäßen Vorrichtungen wird im folgenden anhand schematischer Zeichnungen näher erläutert.

Es zeigt:
- Fig. 1: eine erfindungsgemäße Vorrichtung zum Extrudieren teigiger Massen in einem Längsschnitt,
- Fig. 2: den Schnitt II-II in Fig. 1,
- Fig. 3: ein Beispiel einer mit der in Fig. 1 dargestellten Vorrichtung erzeugten Backware in einer Draufsicht, und
- Fig. 4: den Schnitt IV-IV in Fig.3.

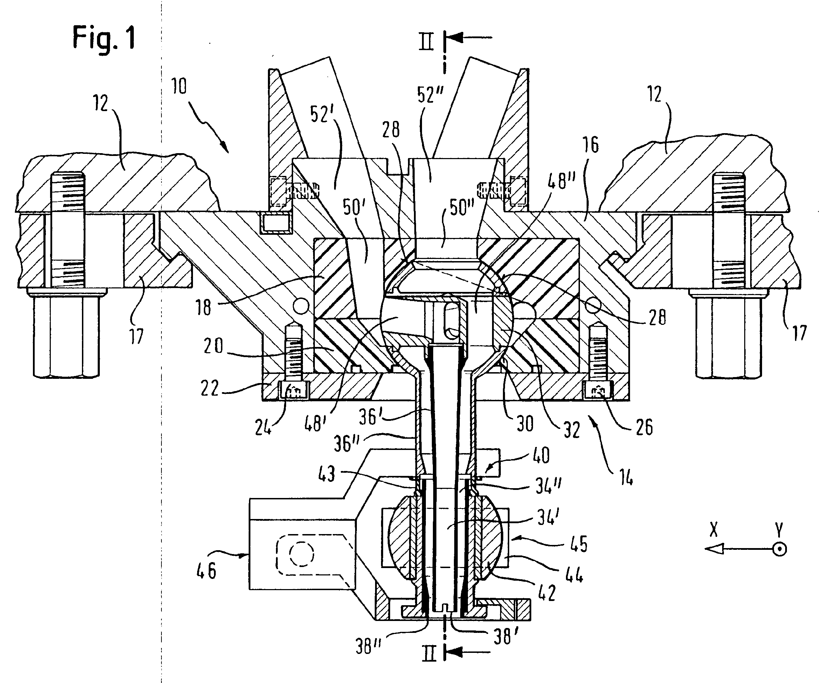

Fig.1 stellt eine Vorrichtung 10 zum Extrudieren teigiger Massen dar. Bei einer derartigen Vorrichtung 10 können zwei Massen durch je einen Zuführkanal 52' und 52" zu zwei Düsen 34' und 34" geführt werden. Die Düsen 34' und 34" weisen Mündungen 38' bzw. 38" auf, durch die die extrudierten Massen austreten und einen Strang 56 einer Backware 54 bilden.

Die Vorrichtung 10 weist ein Gehäuse 12 auf, an dem ein Düsenträger 14 befestigt ist. Der Düsenträger 14 umfaßt ein Trägergehäuse 16, das mittels zweier Halteeinrichtungen 17 derart am Gehäuse 12 befestigt ist, daß es einfach auswechselbar ist. Damit kann die Vorrichtung 10 durch unterschiedlich gestaltete Düsenträger 14 in kurzer Zeit zum Herstellen unterschiedlicher Backwaren umgerüstet werden.

Im Trägergehäuse 16 sind zwei Lagerplatten 18 und 20 eingesetzt. Die Lagerplatten 18 und 20 sind durch eine Trägerplatte 22 gehalten, die durch mehrere Schrauben (nur zwei Schrauben 24 und 26 sind dargestellt) am Trägergehäuse 16 befestigt ist.

Die Lagerplatten 18 und 20 weisen je eine kugelförmige Aushöhlung 28 bzw. 30 auf, die gegenüberliegend angeordnet sind und eine Kugel 32 aufnehmen. Die Kugel 32 ist in den Aushöhlungen 28 und 30 derart geführt, daß eine dichte Kopplung zwischen den Lagerplatten 18 und 20 besteht, durch die zu extrudierende Massen nicht durchtreten können. Die Kugel 32 ist dabei jedoch in den Aushöhlungen 28 und 30 drehbar.

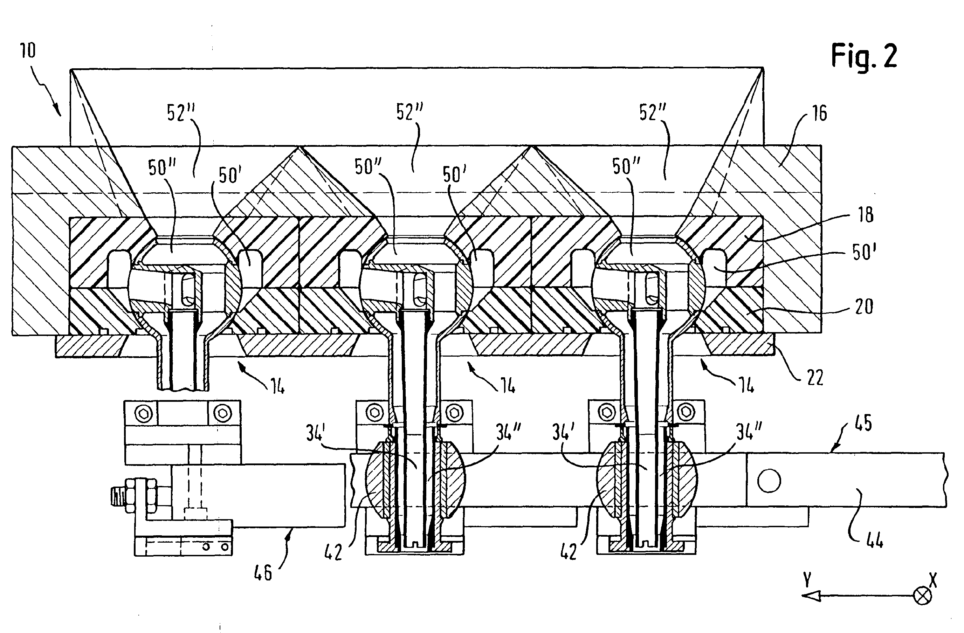

Bezogen auf die Fig. 1 und 2 sind unter der Kugel 32 zwei Düsen angeordnet, eine innere Düse 34' und eine äußere Düse 34". Die Düsen 34' und 34" sind durch ein inneres Rohrstück 36' bzw. ein äußeres Rohrstück 36" gebildet. Die Rohrstücke 36' und 36" enden an Mündungen 38' bzw. 38". Dabei sind die Rohrstücke 36' und 36" konzentrisch zueinander angeordnet, so daß die innere Düse 34' im Querschnitt kreisförmig ist, während die äußere Düse 34" im Querschnitt kreisringförmig ist. Ferner sind die Rohrstücke 36' und 36" an einer Verbindungsstelle 40 teilbar gestaltet, wodurch eine unten beschriebene Schwenkeinrichtung 45 leichter abnehmbar und die Düsen 34' und 34" leichter zu reinigen sind.

Am Umfang des äußeren Rohrstücks 36" ist, im bezogen auf die Fig. 1 und 2 unteren Bereich, eine Kugel 42 über das Rohrstück 26" geschoben und durch eine Klemm- oder Schraubverbindung 43 an der Verbindungsstelle 40 befestigt. Die Verbindungsstelle 40 dient demnach auch zum Anbringen der Kugel 42. Die Kugel 42 ist teilweise von einer Stange 44 umgeben, die die Kugel 42 führt und drehbar aufnimmt.

Die Stange 44 ist Teil einer weiter nicht dargestellten Schwenkeinrichtung 45. Wie einem Fachmann bekannt ist und daher nicht weiter erläutert wird, kann eine derartige Schwenkeinrichtung 45 elektrische, hydraulische oder pneumatische Antriebe aufweisen, die es ermöglichen die Stange 44 mit hoher Genauigkeit in Richtung zweier zueinander senkrechter Achsen X und Y zu versetzten und zu halten.

Beim Versetzen der Stange 44 bewegt diese die in der Kugel 42 geführten Rohrstücke 36' und 36". Die Mündungen 38' und 38" der Düsen 34' bzw. 34" werden dabei in den zwei Achsen X und Y geschwenkt und derart ausgelenkt, daß der beim Extrudieren austretende Strang in einer Ebene abgelegt wird. Auf diese Weise ist eine Backware formbar, die sich in einer Ebene erstreckt. Die Backware kann auch sich kreuzende oder sich überdeckende Stränge aufweisen.

In Fig. 2 ist dargestellt, daß bei der Vorrichtung 10 mehrere Düsenträger 14 nebeneinander angeordnet sind und ihre Düsen 34' und 34" dabei gemeinsam durch eine Stange 44 versetzbar sind.

An der Schwenkeinrichtung 45 ist eine Schneideinrichtung 46 angebracht, die sich unmittelbar unter den Mündungen 38' und 38" schließen kann und dabei den austretenden Strang unterbricht. Die Schneideinrichtung 46 kann auch als Quetscheinrichtung ausgebildet sein, die insbesondere einen gefüllten Strang zunächst verschließt und anschließend trennt.

Die den Mündungen 38' und 38" entgegengesetzten Enden der Rohrstücke 36' und 36" sind mit der Kugel 32 verbunden. Dabei sind in der Kugel 32 zwei Verbindungskanäle 48' und 48" ausgebildet, die ein Rohrstück 36' bzw. 36" mit einem Zuführkanal 50' bzw. 50" verbinden.

Der Verbindungskanal 48' erstreckt sich dabei bezogen auf Fig. 1 und 2 nahezu waagrecht zum Äußeren der Kugel 32. Der Zuführkanal 50' ist als Ringraum um die Kugel 32 ausgestaltet, so daß die Kugel 32 sich drehen kann und dennoch eine Verbindung zwischen dem Zuführkanal 50' und dem Verbindungskanal 48' bestehen bleibt. Der Düsenträger 14 kann daher auch für eine Drehdüse eingesetzt werden, bei der sich die Düse bzw. die Düsen um eine Achse drehen, um gewendelte oder gedrillte Backwaren herzustellen.

Der Verbindungskanal 48" durchsetzt die Kugel 32 bezogen auf die Fig. 1 und 2 von oben nach unten und umgeht dabei den Verbindungskanal 48'. Der Verbindungskanal 48" ist an seiner Öffnung zum Zuführkanal 50" derart groß ausgebildet, daß sich die Kugel 32 drehen kann und dennoch eine Verbindung zwischen dem Verbindungskanal 48" und dem Zuführkanal 50" bestehen bleibt. Die Drehbewegung der Kugel 32 ist dabei insbesondere durch das Spiel des äußeren Rohrstücks 36" in der Lagerplatte 20 begrenzt.

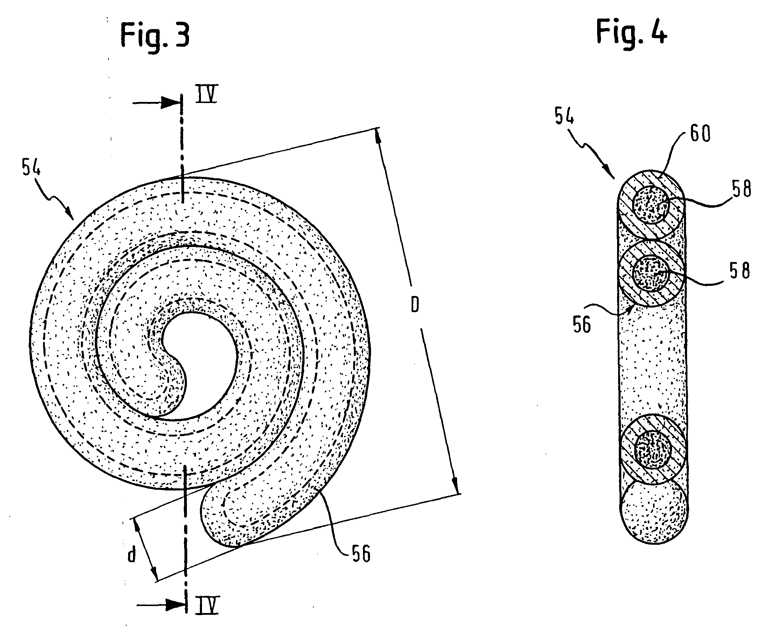

Durch den Zuführkanal 52' ist in einer einem Fachmann bekannten Weise eine äußere Masse, meist eine Teigmasse, und durch den Zuführkanal 52" eine innere Masse, meist eine Teig- oder Fruchtfüllung, zuführbar. Die zugeführten Massen gelangen durch die Verbindungskanäle 48' und 48" sowie die Rohrstücke 36' und 36" aus den Mündungen 38' und 38". Die Mündungen 38' und 38" werden dabei gemeinsam durch die Schwenkeinrichtung 45 versetzt und damit eine Backware 54 gestaltet, wie sie beispielhaft in Fig. 3 und 4 dargestellt ist.

Die Backware 54 weist einen Strang 56 in Schneckenform auf, der in einer Ebene angeordnet ist. Der Strang 56 ist im Querschnitt kreisförmig (Fig. 4) und umfaßt eine Füllung 58 und eine Umhüllung 60. Der Durchmesser d des Strangs 56 beträgt beispielsweise 15 mm, während der Gesamtdurchmesser D der Backware beispielsweise 85 mm beträgt.

## Patentansprüche

1. Düsenträger zum Extrudieren teigiger Massen mit einer durch ein Gelenk mit einer Kugel (32) schwenkbar gelagerten Düse (34'), die an einer Mündung (38') endet, welche von einer Schwenkeinrichtung (45) in zwei zueinander rechtwinkligen Achsen (X, Y) versetzbar ist, wobei in der Kugel (32) ein Verbindungskanal (48') ausgebildet ist, von dem ein Ende mit einem ortsfesten Zuführkanal (50'), und dessen anderes Ende mit der schwenkbaren Düse (34') verbunden ist,
**dadurch gekennzeichnet, daß** der Düsenträger (14) eine zweite Düse (34") aufweist, die konzentrisch zu der ersten Düse (34') angeordnet ist, und in der Kugel (32) ein zweiter Verbindungskanal (48") ausgebildet ist, von dem ein Ende mit einem zweiten orstfesten Zuführkanal (50"), und dessen anderes Ende mit der Düse (34") verbunden ist.

2. Düsenträger nach Anspruch 1,
**dadurch gekennzeichnet, daß** die Düsen (34'; 34") je ein Rohrstück (36'; 36") umfassen, von dem ein Ende schwenkbar gelagert ist und dessen anderes Ende die Mündung (38'; 38") aufweist.

3. Düsenträger nach Anspruch 1, oder 2,
**dadurch gekennzeichnet, daß** die Schwenkeinrichtung (45) eine Stange (44) mit einer darin gelagerten Kugel (42) aufweist.

4. Vorrichtung zum Extrudieren teigiger Massen,
**dadurch gekennzeichnet, daß** - wenigstens ein Düsenträger nach einem der Ansprüche 1 bis 3 vorgesehen ist.

5. Vorrichtung nach Anspruch 4,
**dadurch gekennzeichnet, daß** mehrere Düsenträger (14) nebeneinander angeordnet sind, deren Mündungen (38'; 38") durch die Schwenkeinrichtung (45) gemeinsam versetzbar sind.

6. Vorrichtung nach Anspruch 4 oder 5,
**dadurch gekennzeichnet, daß** an der Schwenkeinrichtung (45) eine Schneid- und/oder Quetscheinrichtung (46) angeordnet ist.

## Claims

1. A nozzle holder for extruding dough materials with a nozzle (34'), which is pivotably mounted by means of a joint with a ball (32) and ends at a mouth (38') that can be displaced by a pivoting device (45) in two axes (X, Y) extending at right angles to one another, a connecting duct (48') being constructed in the ball (32), of which one end is connected to a stationary feed duct (50') and the other end of which is connected to the pivotable nozzle (34'),
**characterised in that** the nozzle holder (14) comprises a second nozzle (34"), which is arranged concentric to the first nozzle (34'), and constructed in the ball (32) is a second connecting duct (48"), of which one end is connected to a second stationary feed duct (50'') and the other end of which is connected to the nozzle (34").

2. The nozzle holder according to claim 1,
**characterised in that** the nozzles (34'; 34") each comprise a tube element (36'; 36''), of which one end is pivotably mounted and the other end of which comprises the mouth (38'; 38").

3. The nozzle holder according to claim 1, or 2,
**characterised in that** the pivoting device (45) comprises a rod (44) with a ball (42) mounted therein.

4. A device for extruding dough materials,
**characterised in that** at least one nozzle holder according to one of claims 1 to 3 is provided.

5. The device according to claim 4,
**characterised in that** a plurality of nozzle holders (14) are arranged adjacent one another, whose mouths (38'; 38") are displaceable together by the pivoting device (45).

6. The device according to claim 4 or 5,
**characterised in that** a cutting and/or squeezing device (46) is arranged on the pivoting device (45).

## Revendications

1. Porte-buse destiné à l'extrusion de matières à l'état pâteux, comportant une buse (34'), qui est montée pivotante par l'intermédiaire d'une articulation à rotule (32) et qui se termine au niveau d'un orifice de sortie (38') qui peut être déplacé par un dispositif de pivotement (45) sur deux axes (X, Y) perpendiculaires, la rotule (32) contenant un conduit de liaison (48'), dont une extrémité est reliée à un conduit d'admission (50') localement fixe et dont l'autre extrémité est reliée à la buse (34') pivotante, **caractérisé en ce que** le porte-buse (14) comporte une deuxième buse (34"), qui est agencée concentriquement à la première buse (34'), et **en ce que** la rotule (32) comporte un deuxième conduit de liaison (48''), dont une extrémité est reliée à un deuxième conduit d'admission (50") et dont l'autre extrémité est reliée à la buse (34'').

2. Porte-buse selon la revendication 1, **caractérisé en ce que** les buses (34' ; 34") comportent chacune un tronçon de tube (36' ; 36") dont une extrémité est montée pivotante et l'autre extrémité comporte l'orifice de sortie (38' ; 38").

3. Porte-buse selon la revendication 1 ou 2, **caractérisé en ce que** le dispositif de pivotement (45) comporte une tige (44) avec une rotule (42) logée dans celle-ci.

4. Dispositif destiné à l'extrusion de matières à l'état pâteux, **caractérisé en ce qu'**il est prévu au moins un porte-buse selon l'une quelconque des revendications 1 à 3.

5. Dispositif selon la revendication 4, **caractérisé en ce que** plusieurs porte-buse (14) sont disposés les uns à côté des autres, leur orifices de sortie (38' ; 38") pouvant être déplacés conjointement par le dispositif de pivotement (45).

6. Dispositif selon la revendication 4 ou 5, **caractérisé en ce qu'**un dispositif de coupe et/ou de pincement (46) est agencé sur le dispositif de pivotement (45).
